# FASCICULE DE BREVET EUROPEEN

(11) **EP 2 566 625 B1**
(45) Date de publication et mention de la délivrance du brevet: **25.02.2015**
(21) Numéro de dépôt: 11724270.1
(22) Date de dépôt: 05.05.2011
(51) Int. Cl.: B02C 23/12, B02C 23/14

(54) **PROCEDE ET INSTALLATION DE BROYAGE D'UNE MATIERE MINERALE CONTENANT AU MOINS DU CALCIUM ET DES IMPURETES METALLIQUES**
VERFAHREN UND VORRICHTUNG ZUR ZERKLEINERUNG VON ERZMATERIAL ENTHALTEND MINDESTENS CALCIUM UND METALLISCHE VERUNREINIGUNGEN
PROCESS AND DEVICE FOR GRINDING MINERAL MATERIAL COMPRISING AT LEAST CALCIUM AND METAL IMPURITIES

(30) Priorité: 05.05.2010 FR 1001926
(43) Date de publication de la demande: 13.03.2013
(73) Titulaire: Fives FCB, 59650 Villeneuve d'Ascq (FR)
(72) Inventeur: BOURBON, Didier, 59650 Villeneuve d'Ascq (FR); DEVROE, Sébastien, 59650 Villeneuve d'Ascq (FR)
(74) Mandataire: Bureau Duthoit Legros Associés
(86) Numéro de dépôt international: PCT/FR2011/000278
(87) Numéro de publication internationale: WO 2011/151534

(56) Documents cités:
- WO-A1-97/14760
- FR-A1- 2 496 495
- US-A- 3 885 744
- US-A- 3 905 556

## Description

L'invention concerne un procédé d'obtention d'une fraction fine destinée à la production de liant hydraulique à partir d'une matière minérale contenant au moins du calcium et des impuretés métalliques, ainsi qu'une installation convenant pour le broyage d'une matière minérale contenant du calcium et des impuretés métalliques en tant que tels.

L'invention trouve une application particulière pour la production de liants hydrauliques tel que le ciment, notamment à partir de laitiers de l'industrie métallurgique.

Dans la fabrication de ciment hydraulique, la voie habituelle qui utilise du calcaire présente l'inconvénient d'émettre de grandes quantités de CO₂ dans l'atmosphère, et de consommer d'importantes quantités d'énergie sous forme de combustible.

D'autres matières enrichies en calcium peuvent être utilisées pour produire des liants hydrauliques. Parmi elles, les laitiers de l'industrie métallurgique sont une source de matières premières qui peut être valorisée par la fabrication de ciment hydraulique, évitant ainsi les inconvénients précités. L'utilisation de ce laitier pour la fabrication de ciment permet, en outre, de se débarrasser de ces déchets des industries métallurgiques.

Toutefois, au cours de leur production, les laitiers entraînent des particules métalliques de tailles diverses, dont la présence dans le ciment peut en dégrader les performances, en particulier s'il reste des particules grossières dans le produit. Lorsque le broyeur utilisé pour la production de ciment est un broyeur à boulets, les particules métalliques sont fragmentées au cours du processus de broyage par les chocs entre les boulets.

Du fait de leur faible granulométrie dans le produit fini leur présence n'altère pas la qualité du ciment. Cependant le broyeur à boulets présente un faible rendement énergétique par comparaison à d'autres broyeurs opérant par compression de lit de matière, et consomme environ le double de la quantité d'énergie requise par ces derniers.

Un exemple de broyeur opérant par compression de lit de matière est divulgué dans le document EP 0486371. Le broyeur de ce document comprend une piste circulaire formée par la paroi intérieure d'un cylindre, globalement horizontal, animé d'un mouvement de rotation, ainsi qu'un rouleau apte à rouler sur la piste.

Lors de la mise en rotation du cylindre, la matière est broyée, comprimée entre le rouleau et la paroi intérieure du cylindre.

Toutefois, le broyage par compression ne permet pas de fragmenter totalement les particules métalliques à cause de leur grande ductilité. Des particules métalliques grossières restent donc présentes dans la matière sortant du broyeur, ou encore s'accumulent dans le broyeur lui-même.

Une étape de séparation magnétique est généralement présente en entrée du broyeur. Le rôle de cette étape est d'éviter l'entrée d'éléments magnétiques de taille importante qui pourraient endommager les galets (rouleaux) des broyeurs par compression de matières.

Cependant, cette étape de séparation magnétique n'est pas capable d'éliminer les fractions métalliques qui sont incluses dans des morceaux de laitier.

On connaît également du document WO97/14760 un produit abrasif constitué principalement d'oxyde de fer, de granulométrie comprise entre 100 µm et 600µm, son utilisation, sa méthode de production et un procédé de production de produits granuleux métalliques secondaires à partir de laitier. L'objet de ce procédé est l'obtention de produits granuleux métalliques secondaires qui trouvent une application particulière, par exemple comme additif abrasif ou encore pour la réalisation de ballast.

Ce procédé vise à sélectionner la partie métallique majoritaire d'un laitier et comprend successivement les étapes suivantes :
- alimenter le laitier dans un broyeur,
- broyer le laitier dans le broyeur, obtenant un broyat,
- trier de manière aéraulique le broyat afin de séparer une fraction principalement métallique d'une première fraction fine,
- trier de manière magnétique ladite fraction principalement métallique afin de séparer les produits non magnétiques d'un produit raffiné,
- trier de manière aéraulique le produit raffiné afin de séparer des granules métalliques d'une seconde fraction fine, les granules comprenant une pluralité de tailles distinctes.

Un tel procédé permet de sélectionner la partie majoritaire métallique d'un matériau mais ne conviendrait pas pour extraire, de manière satisfaisante, des impuretés métalliques contenues à titre résiduel dans une matière minérale.

L'objet de la présente invention est de pallier les inconvénients précités en proposant un procédé d'obtention d'une fraction fine destinée à la production de liant hydraulique à partir d'une matière minérale contenant au moins du calcium et des impuretés métalliques, permettant d'obtenir un produit fini de qualité améliorée, convenant pour la production d'un liant hydraulique.

Un autre but de l'invention est de proposer une installation en tant que telle convenant pour la mise en oeuvre du procédé.

D'autres buts et avantages de la présente invention apparaîtront au cours de la description qui n'est donnée qu'à titre indicatif et qui n'a pas pour but de la limiter.

L'invention concerne tout d'abord un procédé d'obtention d'une fraction fine destinée à la production de liant hydraulique à partir d'une matière minérale contenant au moins du calcium et des impuretés métalliques. Le procédé est mis en oeuvre dans une installation comprenant un broyeur et un dispositif de sélection granulométrique, appelé dispositif sélecteur, apte à séparer les matières en deux fractions.

Ledit procédé comprend les étapes suivantes :
- on prévoit ladite matière minérale qui comprend du laitier de l'industrie métallurgique, en tout ou partie,
- on broie par compression de lit de matière ladite matière minérale au moyen du broyeur, obtenant un broyat,

- on sépare le broyat en ladite fraction fine et une fraction grossière au moyen dudit dispositif sélecteur,
- on retourne la fraction grossière au broyeur pour une nouvelle étape de broyage.

Selon l'invention, on extrait les impuretés métalliques en soumettant au moins une partie du broyat à un tri magnétique destiné à séparer les impuretés métalliques des matières minérales, le tri étant mis en oeuvre soit sur la fraction grossière, en aval du dispositif sélecteur, en amont du broyeur, soit entre le broyeur et le dispositif sélecteur, avant séparation du broyat. Selon des caractéristiques optionnelles seules ou en combinaison :
- le tri s'opère sur la fraction grossière, en aval du dispositif sélecteur, en amont du broyeur, les matières minérales triées étant retournées au broyeur, les matières métalliques triées étant évacuées ;
- la fraction grossière représente, en masse, au moins 80% du broyat issu du broyeur ;
- une partie de la matière minérale fraîche alimente directement ledit dispositif sélecteur ;
- ladite fraction fine constitue le produit fini
- ;le dispositif sélecteur est constitué au moins par un séparateur dynamique équipé d'un rotor ;
- le dispositif sélecteur comprend, outre le séparateur dynamique, un séparateur statique constitué essentiellement par une gaine ascendante, les matières fines en sortie dudit séparateur statique alimentant l'entrée dudit séparateur dynamique ;
- le séparateur statique réalise une séparation granulométrique supérieure au millimètre et ledit séparateur dynamique réalise une séparation granulométrique à une taille inférieure à 100 micromètres ;
- la matière minérale est un mélange de laitier de l'industrie métallurgie et d'une substance minérale, ladite substance minérale pouvant représenter au maximum 20 % en poids du laitier de l'industrie métallurgique.

L'invention concerne également une installation convenant pour le broyage d'une matière minérale contenant au moins du calcium et des impuretés métalliques, comprenant :
- un broyeur et un dispositif de sélection granulométrique, appelé dispositif sélecteur, apte à séparer les matières en deux fractions, l'une fine, l'autre grossière, ledit dispositif sélecteur comprenant un séparateur dynamique équipé d'un rotor, notamment, à axe vertical, muni de pales sur sa périphérie, apte, à séparer les particules selon leur granulométrie en soumettant lesdites particules à des forces antagonistes, d'une part la force générée par la rotation du rotor qui tend à les rejeter, et d'autre part, la force de trainée générée par la vitesse d'un gaz aspiré vers le centre du rotor,
- des premiers moyens de convoyage pour transporter le broyat en sortie du broyeur vers l'entrée du dispositif sélecteur,
- des seconds moyens de convoyage pour transporter la fraction grossière en sortie dudit dispositif sélecteur vers l'entrée du broyeur.

Selon l'invention, ladite installation présente en outre un dispositif magnétique coopérant avec lesdits premiers moyens de convoyage et/ou lesdits seconds moyens de convoyage, apte à extraire des matières transportées au moins une partie des impuretés métalliques.

Selon des caractéristiques optionnelles de l'installation :
- le broyeur est un broyeur horizontal à galet(s) ;
- ledit dispositif sélecteur comprend, outre le séparateur dynamique, un séparateur statique constitué essentiellement par une gaine ascendante, les matières fines en sortie dudit séparateur statique alimentant l'entrée dudit séparateur dynamique ;
- ledit dispositif magnétique coopère avec lesdits premiers moyens de convoyage;
- ledit dispositif magnétique coopère avec lesdits seconds moyens de convoyage.

L'invention concerne également l'utilisation de la fraction fine obtenue par la mise en oeuvre du procédé conforme à l'invention comme produit fini pour la production de liant hydraulique tel que le ciment ou de l'installation conforme à l'invention pour la production de liant hydraulique tel que le ciment.

L'invention sera mieux comprise à la lecture de la description suivante accompagnée des dessins en annexe parmi lesquels :
- la figure 1 est une illustration schématique d'un procédé de broyage conforme à l'invention selon un premier mode de réalisation,
- la figure 2 est un exemple d'un procédé de broyage conforme à l'invention selon un second mode de réalisation,
- la figure 3 est un exemple de procédé de broyage conforme à l'invention selon un troisième mode de réalisation,
- la figure 4 est un exemple de procédé de broyage conforme à l'invention selon un quatrième mode de réalisation.

L'invention concerne un procédé de broyage d'une matière minérale contenant au moins du calcium et des impuretés métalliques.

Ladite matière minérale 10 peut ainsi comprendre du laitier de l'industrie métallique en tout ou partie. Par exemple, la matière minérale est un mélange de laitier de l'industrie métallurgique et d'une substance minérale contenant notamment du calcium. Selon un exemple, la substance minérale représente au maximum 20 % en masse du laitier de l'industrie métallurgique.

Ce procédé de broyage est mis en oeuvre dans une installation 1 qui comprend un broyeur 2 et un dispositif de sélection granulométrique, appelé dispositif sélecteur 3, apte à séparer les matières en deux fractions.

Le broyeur 2 peut être un broyeur horizontal à galet(s) (ou rouleau). Il peut notamment s'agir d'un broyeur de type de celui divulgué par le document EP 0486371, comprenant un cylindre rotatif à axe horizontal et au moins un rouleau placé à l'intérieur dudit rouleau de façon à rouler sur la piste constituée par la face intérieure du cylindre, ainsi que des moyens pour entraîner le cylindre en rotation.

Dans ce type de broyeur, la matière est broyée, comprimée entre ledit rouleau et la paroi intérieure du cylindre lorsque ce dernier est animé d'un mouvement de rotation sur son axe.

Le dispositif de sélection granulométrique peut comprendre un séparateur dynamique 4 équipé d'un rotor. Il peut notamment s'agir du séparateur dynamique de type divulgué par le document FR 2642994 ou encore par le document FR 2658096.

Dans ce type de séparateur dynamique, la séparation est réalisée à l'aide d'un rotor cylindrique ou tronconique à axe vertical muni de pales régulièrement réparties sur sa périphérie. Entre les dites pales, les particules sont soumises à des forces antagonistes, à savoir d'une part la force centrifuge générée par la rotation de rotor et qui tend à les rejeter, et d'autre part la force de traînée générée par la vitesse d'un gaz aspiré vers le centre du rotor, et qui tend à les entraîner avec lui vers la sortie dudit gaz.

Dans ce type de séparateur dynamique, la force centrifuge est plus élevée pour les particules de dimension les plus grosses et la force de traînée plus élevée pour les particules de dimension les plus faibles, ce qui réalise la sélection granulométrique des matières traitées. Les matières aux dimensions inférieures à une granulométrie déterminée de sélection sont donc entraînées avec le gaz vers la sortie du gaz tandis que les matières aux dimensions supérieures à ladite granulométrie déterminée tombent et sont collectées.

Le dispositif sélecteur peut comprendre, outre le séparateur dynamique 4 un séparateur statique 5 constitué essentiellement par une gaine ascendante. Dans ce dispositif sélecteur 3, à deux étages de séparation, les matières fines en sortie du séparateur statique 5 alimentent l'entrée du séparateur dynamique 4.

Ce séparateur statique 5 peut être du type de celui divulgué dans la demande WO 2008/068432. Ce séparateur statique est constitué essentiellement par une gaine verticale à flux ascendant munie d'une arrivée de gaz à sa base, et équipée d'une ouverture inférieure et d'une ouverture supérieure ainsi que d'une ouverture d'alimentation pour les matières à traiter entre ladite ouverture inférieure et ladite ouverture supérieure. Dans ce séparateur statique, les matières fines s'échappent avec le gaz par l'ouverture supérieure grâce à la portance dudit flux ascendant tandis qu'une autre partie des matières plus grossières n'est pas entraînée par ledit gaz et chute par l'ouverture inférieure.

Ce séparateur statique peut présenter, en outre, des moyens pour créer des turbulences disposées entre l'ouverture inférieure et l'ouverture d'alimentation de la conduite, notamment sous la forme de pales globalement horizontales fixées contre la paroi interne de la conduite de gaz et orientées vers le centre de la conduite, tel que développé dans la demande WO 2008/068432.

Le procédé conforme à l'invention comprend les étapes suivantes :
- on broie par compression de lit de matière ladite matière minérale 10 au moyen du broyeur 2, obtenant un broyat 11,
- on sépare le broyat 11 en une fraction fine 12, constituant notamment le produit fini, et une fraction grossière 13 au moyen dudit dispositif sélecteur 3,
- on retourne la fraction grossière 13 au broyeur 2 pour une nouvelle étape de broyage.

Selon l'invention, on soumet au moins une partie du broyat 11 ou 13 à un tri destiné à séparer les impuretés métalliques des matières minérales.

Cette étape de tri peut être un tri magnétique, mis en oeuvre notamment par divers appareils tels que des détecteurs magnétiques et des extracteurs magnétiques notamment installés au dessus de convoyeurs notamment à courroies qui véhiculent la matière à traiter.

Les détecteurs magnétiques permettent de détecter les fragments métalliques en créant un champ électromagnétique permettant de dévier la matière contenant lesdits fragments métalliques. Les extracteurs comprennent des aimants et attirent des particules magnétiques pour les éliminer. Toutefois, ces derniers appareils ne peuvent pas extraire les particules magnétiques situées sous le lit de matière.

Avantageusement, la fraction grossière 13 peut représenter en masse, au moins 80 % du broyat issus du broyeur 2. On crée ainsi un cycle important pour que la matière puisse être soumise plusieurs fois, successivement, au tri notamment magnétique, ce qui améliore la performance du tri.

Une élimination satisfaisante des fractions magnétiques est obtenue par au moins quatre passages successifs de la matière dans l'étape de tri magnétiques ce qui correspond à la proportion de matière restante d'au moins 80 % du broyat.

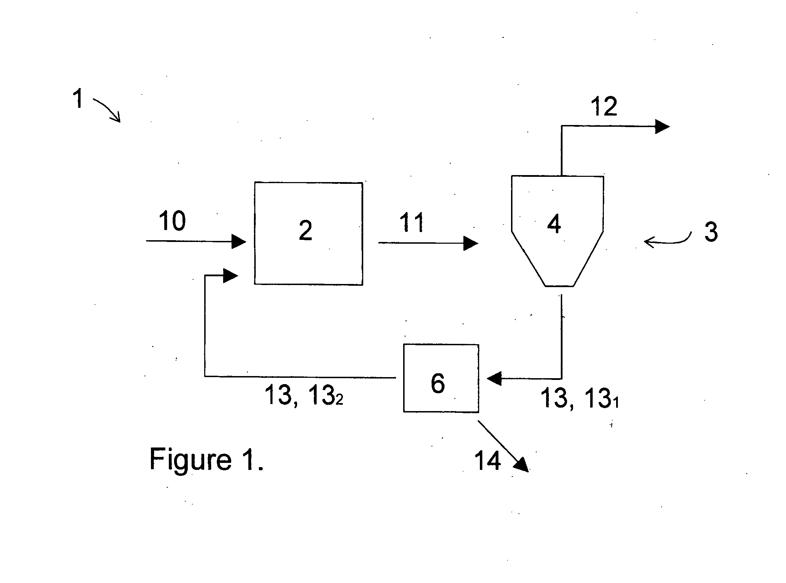

Selon les modes de réalisation illustrés par les figures 1 à 3, non limitatifs, le tri peut s'opérer sur la fraction grossière 13₁, en aval du dispositif sélecteur 3, en amont du broyeur 2. Les matières minérales triées 13₂ sont retournées au broyeur 2, les matières métalliques 14 triées étant évacuées.

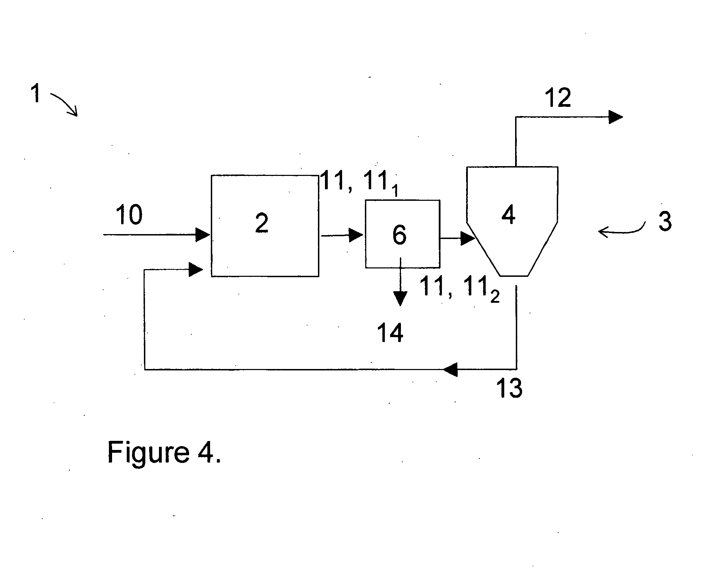

Selon un autre mode de réalisation illustré à la figure 4, l'étape de tri peut être mise en oeuvre entre le broyeur 2 et le dispositif sélecteur 3, avant séparation du broyat 11.

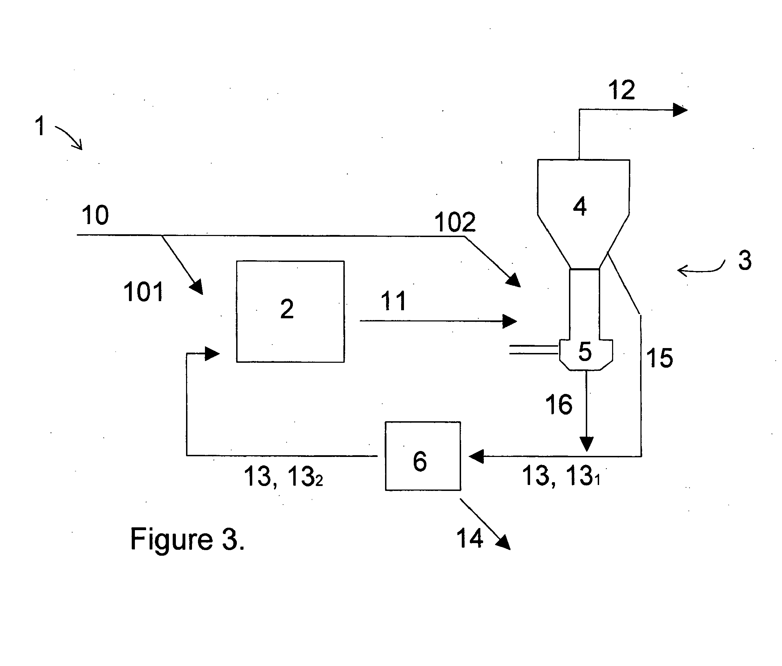

Selon un exemple non limitatif représenté à la figure 3, une partie 102 de la matière minérale 10 alimente directement le dispositif sélecteur 3.

Nous décrivons maintenant en détail les exemples non limitatifs des figures 1 à 3.

La figure 1 représente un procédé de broyage utilisant un broyeur 2 de type broyeur à compression de lit de matière, et un dispositif de sélection granulométrique 3 constitués par un séparateur dynamique 4 équipé d'un rotor. La matière à traiter 10 est alimentée au broyeur 2 qui réalise une étape de broyage, produisant un broyat 11. Ce broyat 11 est conduit, grâce à des premiers moyens de convoyage, vers le dispositif du sélecteur 3 qui sépare le broyat 11 en une fraction fine 12, le produit fini, et une fraction grossière 13.

La fraction grossière 13 est transportée à nouveau à l'entrée du broyeur 2 grâce à des seconds moyens de convoyage.

Un dispositif magnétique 6 coopère avec les seconds moyens de convoyage et permet d'extraire des matières transportées une partie des impuretés métalliques. Plus particulièrement, les matières métalliques triées 14 sont évacuées, les matières minérales triées 13₂ étant acheminées par lesdits seconds moyens de convoyage à l'entrée du broyeur 2.

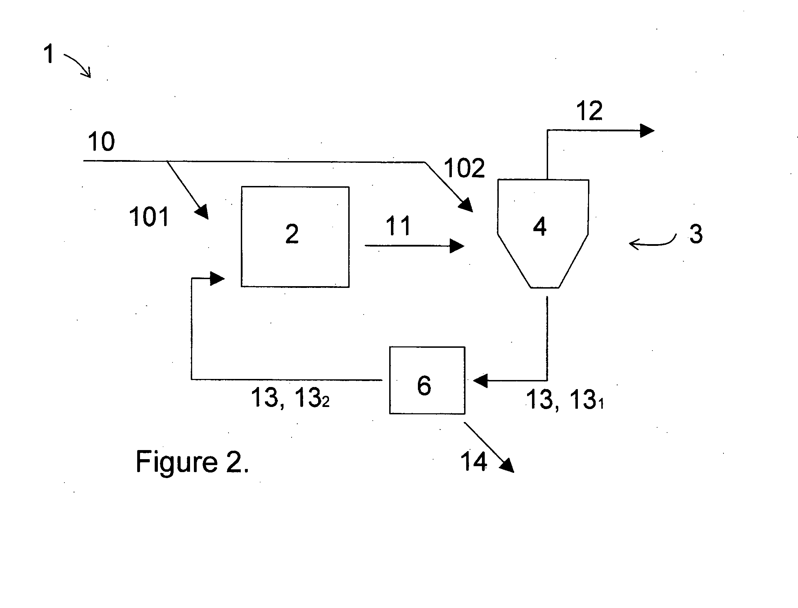

La figure 2 représente un second mode de réalisation de l'invention. Elle se distingue du mode de réalisation de la figure 1 en ce qu'une partie 102 de la matière minérale 10, alimente directement le dispositif sélecteur 3.

Le broyeur 2 produit le broyat 11 à partir d'une fraction 101 de la matière minérale qui est alimentée directement, et de la matière recyclée 13₂. Le dispositif sélecteur 3 traite l'ensemble des matières 11 et 102 et sépare une fraction fine 12, le produit fini, et une fraction grossière 13. La fraction grossière est soumise à un tri magnétique grâce au dispositif magnétique 6. Les matières métalliques triées 14 sont évacuées tandis que la matière minérale triée 13₂ est acheminée vers le broyeur 2 en vue d'une nouvelle étape de broyage.

La figure 3 représente un troisième mode de réalisation de l'invention dans laquelle l'étape de sélection granulométrique comporte deux étages successifs 5,4.

Le premier étage est un séparateur statique 5 et réalise une séparation granulométrique à une taille élevée supérieure au millimètre, tandis que le deuxième étage est un séparateur dynamique 4 équipé d'un rotor, qui réalise une séparation granulométrique à une taille plus faible inférieure à 100 micromètres.

Une partie 102 de la matière première 10, riche en particules fines, est directement conduite vers l'étape de sélection granulométrique, et plus particulièrement vers l'entrée d'alimentation du séparateur statique 5. Le broyeur produit le broyat 11 à partir d'une partie 101 de la matière minérale 10 qui est directement alimentée au broyeur 2, et une partie de la fraction grossière 13₂ qui est recyclée. Le séparateur statique 5 et le séparateur dynamique 4 traitent ensemble les matières 11,102 et séparent une fraction fine 12 d'une fraction grossière 13.

Plus particulièrement, la fraction grossière 13 est composée d'une fraction grossière 16 rejetée par le séparateur statique 5 et une fraction grossière 15 rejetée par le séparateur dynamique 4.

Cette fraction grossière 13 est conduite par l'intermédiaire de moyens de convoyage jusqu'à l'entrée du broyeur 2. Un dispositif magnétique 6 coopère avec les moyens de convoyage et permet d'extraire des matières transportées une partie des impuretés métalliques. Plus particulièrement, le dispositif magnétique 6 permet d'évacuer la matière métallique triée 14, la matière minérale triée 13₂ étant acheminée jusqu'au broyeur 2, en vue d'une nouvelle étape de broyage.

Le mode de réalisation de la figure 4 se distingue de celui de la figure 1 en la position du dispositif magnétique 6 qui coopère avec lesdits premiers moyens de convoyage entre le broyeur 2 et le dispositif sélecteur 3. Le broyat 11, 11₁ en sortie du broyeur 2 est soumis à l'action dudit dispositif magnétique 6 qui permet d'évacuer la matière métallique triée 14 tandis que l'autre partie du broyat 11,11₂ est acheminée jusqu'au dispositif sélecteur 3.

Dans le mode de réalisation des figures 1 à 4, le broyeur peut être un broyeur horizontal à galet(s).

Des premiers moyens de convoyage, tels que convoyeurs à bande ou similaire, permettent de transporter le broyat 11 en sortie du broyeur 2 jusqu'à l'entrée du dispositif sélecteur 3.

Des seconds moyens de convoyage, tels que convoyeurs à bande ou similaire, permettent de transporter la fraction grossière 13 en sortie du dispositif sélecteur 3 jusqu'à l'entrée du broyeur 2.

Naturellement, d'autres modes de réalisation auraient pu être envisagés par l'homme du métier sans pour autant sortir du cadre de l'invention définie par les revendications ci-après.

## Revendications

1. Procédé d'obtention d'une fraction fine destinée à la production de liant hydraulique à partir d'une matière minérale (10) contenant au moins du calcium et des impuretés métalliques, mis en oeuvre dans une installation (1) comprenant un broyeur (2) et un dispositif de sélection granulométrique, appelé dispositif sélecteur (3), apte à séparer les matières en deux fractions (12,13),
ledit procédé comprenant les étapes suivantes :
- on prévoit ladite matière minérale (10) qui comprend du laitier de l'industrie métallurgique, en tout ou partie,
- on broie par compression de lit de matière ladite matière minérale (10) au moyen du broyeur (2), obtenant un broyat (11),
- on sépare le broyat (11) en ladite fraction fine (12) et une fraction grossière (13) au moyen dudit dispositif sélecteur (3),
- on retourne la fraction grossière (13) au broyeur (2) pour une nouvelle étape de broyage,
**caractérisé en ce qu'**on extrait les impuretés métalliques en soumettant au moins une partie du broyat à un tri magnétique destiné à séparer les impuretés métalliques des matières minérales, le tri étant mis en oeuvre soit sur la fraction grossière (13₁), en aval du dispositif sélecteur (3), en amont du broyeur (2), soit entre le broyeur (2) et le dispositif sélecteur (3), avant séparation du broyat (11).

2. Procédé selon la revendication 1, dans lequel le tri s'opère sur ladite fraction grossière (13₁), en aval du dispositif sélecteur (3), en amont du broyeur (2), les matières minérales triées (13₂) étant retournées au broyeur (2), les matières métalliques triées (14) étant évacuées.

3. Procédé selon la revendication 1 ou 2, dans lequel la fraction grossière (13) représente, en masse, au moins 80% du broyat (11) issus du broyeur (2).

4. Procédé selon l'une des revendications 1 à 3, dans lequel une partie (102) de la matière minérale (10) alimente directement ledit dispositif sélecteur (3).

5. Procédé selon l'une des revendications 1 à 4, dans lequel ladite fraction fine (12) constitue le produit fini.

6. Procédé selon l'une des revendications 1 à 5, dans lequel le dispositif sélecteur (3) est constitué au moins par un séparateur dynamique (4) équipé d'un rotor.

7. Procédé selon la revendication 6, dans lequel ledit dispositif sélecteur (3) comprend, outre le séparateur dynamique (4), un séparateur statique (5) constitué essentiellement par une gaine ascendante, les matières fines en sortie dudit séparateur statique alimentant l'entrée dudit séparateur dynamique (4).

8. Procédé selon la revendication 7, dans lequel le séparateur statique (5) réalise une séparation granulométrique supérieure au millimètre et ledit séparateur dynamique (4) réalise une séparation granulométrique à une taille inférieure à 100 micromètres.

9. Procédé selon la revendication 1 à 8, dans lequel la matière minérale est un mélange de laitier de l'industrie métallurgie et d'une substance minérale.

10. Installation (1) conçue pour la mise en oeuvre du procédé selon l'une des revendications 1 à 9, convenant pour le broyage d'une matière minérale contenant au moins du calcium et des impuretés métalliques, comprenant :
- un broyeur (2) et un dispositif de sélection granulométrique, appelé dispositif sélecteur (3), apte à séparer les matières en deux fractions, l'une fine (12), l'autre grossière (13), ledit dispositif sélecteur (3) comprenant un séparateur dynamique (4) équipé d'un rotor à axe vertical, muni de pales sur sa périphérie, apte à séparer des particules selon leur granulométrie en soumettant lesdites particules à des forces antagonistes, d'une part la force générée par la rotation du rotor qui tend à les rejeter, et d'autre part, la force de traînée générée par la vitesse d'un gaz aspiré vers le centre du rotor,
- des premiers moyens de convoyage pour transporter le broyat (11) en sortie du broyeur (2) vers l'entrée dudit dispositif sélecteur (3),
- des seconds moyens de convoyage pour transporter la fraction grossière (13) en sortie dudit dispositif sélecteur (3) vers l'entrée du broyeur (2),
**caractérisé en ce qu'**elle présente, en outre, un dispositif magnétique (6), coopérant avec lesdits premiers moyens de convoyage et/ou lesdits seconds moyens de convoyage, apte à extraire des matières transportées au moins une partie (14) des impuretés métalliques.

11. Installation selon la revendication 10, dans laquelle le broyeur (2) est un broyeur horizontal à galet(s).

12. Installation selon la revendication 10 ou 11, dans laquelle ledit dispositif sélecteur (3) comprend, outre le séparateur dynamique (4), un séparateur statique (5) constitué essentiellement par une gaine ascendante, les matières fines en sortie dudit séparateur statique alimentant l'entrée dudit séparateur dynamique (4).

13. Installation selon l'une des revendications 10 à 12, dans laquelle ledit dispositif magnétique (6) coopère avec lesdits premiers moyens de convoyage.

14. Installation selon l'une des revendications 10 à 12 dans laquelle ledit dispositif magnétique (6) coopère avec lesdits seconds moyens de convoyage.

15. Utilisation de la fraction fine (12) obtenue par la mise en oeuvre du procédé selon l'une des revendications 1 à 9 comme produit fini pour la production de liant hydraulique tel que le ciment ou de l'installation selon l'une des revendications 10 à 14 pour la production de liant hydraulique tel que le ciment.

## Patentansprüche

1. Verfahren zum Erhalt einer Feinfraktion, die zur Herstellung eines hydraulisches Bindemittels aus einem Erzmaterial (10), enthaltend mindestens Calcium und metallische Verunreinigungen, bestimmt ist, das in einer Anlage (1) durchgeführt wird, die einen Zerkleinerer (2) und eine Vorrichtung zur Korngrößenklassierung, genannt Klassiervorrichtung (3), umfasst, die geeignet ist, die Materialien in zwei Fraktionen (12, 13) zu trennen,
wobei das Verfahren die folgenden Schritte umfasst:
- Vorsehen des Erzmaterials (10), das ganz oder teilweise Schlacke der Hüttenindustrie umfasst,
- Druckzerkleinern im Gutbett des Erzmaterials (10) mithilfe des Zerkleinerers (2), wodurch ein Zerkleinerungsgut (11) erhalten wird,
- Trennen des Zerkleinerungsguts (11) in die Feinfraktion (12) und eine Grobfraktion (13) mithilfe der Klassiervorrichtung (3),
- Zurücktransportieren der Grobfraktion (13) in den Zerkleinerer (2) für einen erneuten Zerkleinerungsschritt,
**dadurch gekennzeichnet, dass** die metallischen Verunreinigungen extrahiert werden, indem mindestens ein Teil des Zerkleinerungsguts einer magnetischen Sortierung unterzogen wird, die dazu bestimmt ist, die metallischen Verunreinigungen von den Erzmaterialien zu trennen, wobei die Sortierung entweder an der Grobfraktion (13₁), stromabwärts der Klassiervorrichtung (3), stromaufwärts des Zerkleinerers (2) oder zwischen dem Zerkleinerer (2) und der Klassiervorrichtung (3), vor der Trennung des Zerkleinerungsguts (11) durchgeführt wird.

2. Verfahren nach Anspruch 1, wobei die Sortierung an der Grobfraktion (13₁), stromabwärts der Klassiervorrichtung (3), stromaufwärts des Zerkleinerers (2) erfolgt, wobei die sortierten Erzmaterialien (13₂) zum Zerkleinerer (2) zurücktransportiert, die sortierten Erzmaterialien (14) abgeleitet werden.

3. Verfahren nach Anspruch 1 oder 2, wobei die Grobfraktion (13) mindestens 80 Gew.-% des aus dem Zerkleinerer (2) kommenden Zerkleinerungsguts (11) darstellt.

4. Verfahren nach einem der Ansprüche 1 bis 3, wobei ein Teil (102) des Erzmaterials (10) direkt der Klassiervorrichtung (3) zugeführt wird.

5. Verfahren nach einem der Ansprüche 1 bis 4, wobei die Feinfraktion (12) das Endprodukt bildet.

6. Verfahren nach einem der Ansprüche 1 bis 5, wobei die Klassiervorrichtung (3) aus mindestens einem dynamischen Sichter (4) besteht, der mit einem Rotor ausgestattet ist.

7. Verfahren nach Anspruch 6, wobei die Klassiervorrichtung (3) neben dem dynamischen Sichter (4) einen statischen Sichter (5) umfasst, der im Wesentlichen aus einem aufsteigenden Kanal besteht, wobei die aus dem statischen Sichter kommenden Feinmaterialien dem Eingang des dynamischen Sichters (4) zugeführt werden.

8. Verfahren nach Anspruch 7, wobei der statische Sichter (5) eine Korngrößensichtung oberhalb von einem Millimeter bewirkt und der dynamische Sichter (4) eine Korngrößensichtung in einer Größe unterhalb von 100 Mikrometer bewirkt.

9. Verfahren nach Anspruch 1 bis 8, wobei das Erzmaterial ein Gemisch aus Schlacke der Hüttenindustrie und einer Erzsubstanz ist.

10. Anlage (1), die zur Durchführung des Verfahrens nach einem der Ansprüche 1 bis 9 konzipiert ist, das zum Zerkleinern eines Erzmaterials, enthaltend mindestens Calcium und metallische Verunreinigungen, geeignet ist, umfassend:
- einen Zerkleinerer (2) und eine Vorrichtung zur Korngrößenklassierung, genannt Klassiervorrichtung (3), die geeignet ist, die Materialien in zwei Fraktionen, eine Feinfraktion (12) und eine Grobfraktion (13), zu trennen, wobei die Klassiervorrichtung (3) einen dynamischen Sichter (4) umfasst, der mit einem vertikalachsigen Rotor ausgestattet ist, der auf seinem Umfang mit Schaufeln versehen ist, die geeignet sind, die Partikel gemäß ihrer Korngröße zu trennen, indem er die Partikel antagonistischen Kräften aussetzt, einerseits der Kraft, die durch die Rotation des Rotors erzeugt wird, die die Tendenz hat, sie abzustoßen, und andererseits der Widerstandskraft, die von der Geschwindigkeit eines zum Zentrum des Rotors gesaugten Gases erzeugt wird,
- erste Mittel zum Befördern, um das Zerkleinerungsgut (11) vom Ausgang des Zerkleinerers (2) zum Eingang der Klassiervorrichtung (3) zu transportieren,
- zweite Mittel zum Befördern, um die Grobfraktion (13) vom Ausgang der Klassiervorrichtung (3) zum Eingang des Zerkleinerers (2) zu transportieren,
**dadurch gekennzeichnet dass** sie ferner eine magnetische Vorrichtung (6) aufweist, die mit den ersten Mitteln zum Befördern und/oder den zweiten Mitteln zum Befördern zusammenwirkt, die geeignet ist, aus den transportierten Materialien mindestens einen Teil (14) der metallischen Verunreinigungen zu extrahieren.

11. Anlage nach Anspruch 10, wobei der Zerkleinerer (2) ein Horizontalzerkleinerer mit Walze(n) ist.

12. Anlage nach Anspruch 10 oder 11, wobei die Klassiervorrichtung (3) neben dem dynamischen Sichter (4) einen statischen Sichter (5) umfasst, der im Wesentlichen aus einem aufsteigenden Kanal besteht, wobei die aus dem statischen Sichter kommenden Feinmaterialien dem Eingang des dynamischen Sichters (4) zugeführt werden.

13. Anlage nach einem der Ansprüche 10 bis 12, wobei die magnetische Vorrichtung (6) mit den ersten Mitteln zum Befördern zusammenwirkt.

14. Anlage nach einem der Ansprüche 10 bis 12, wobei die magnetische Vorrichtung (6) mit den zweiten Mitteln zum Befördern zusammenwirkt.

15. Verwendung der Feinfraktion (12), die durch die Durchführung des Verfahrens nach einem der Ansprüche 1 bis 9 erhalten wurde, als Endprodukt für die Herstellung eines hydraulischen Bindemittels, wie etwa Zement, oder der Anlage nach einem der Ansprüche 10 bis 14 zur Produktion von hydraulischem Bindemittel, wie etwa Zement.

## Claims

1. Method of obtaining a fine fraction intended for producing hydraulic binder from a mineral material (10) containing at least calcium and metal impurities, implemented in plant (1) comprising a grinder (2) and a granulometric selection device, referred to as a selector device (3), able to separate the material into two fractions (12, 13),
said method comprising the following steps:
- said mineral material (10), which comprises slag from the metallurgical industry, in whole or in part, is provided,
- said mineral material (10) is ground by material bed compression by means of the grinder (2), obtaining a ground material (11),
- the ground material (11) is separated into said fine fraction (12) and a coarse fraction (13) by means of said selector device (3),
- the coarse fraction (13) is returned to the grinder (2) for a further grinding step, **characterised in that** the metal impurities are extracted by subjecting at least part of the ground material to magnetic sorting intended to separate the metal impurities from the mineral materials, the sorting being implemented either on the coarse fraction (13) downstream of the selector device (3) and upstream of the grinder (2), or between the grinder (2) and the selector device (3), before separation of the ground material (11).

2. Method according to claim 1, wherein the sorting takes place on said coarse fraction (13₁) downstream of the selector device (3), and upstream of the grinder (2), the sorted mineral materials (13₂) being returned to the grinder (2), the sorted metal materials (14) being discharged.

3. Method according claim 1 or 2, wherein the coarse fraction (13) represents by weight at least 80% of the ground material (11) issuing from the grinder (2).

4. Method according to one of claims 1 to 3, wherein a part (102) of the mineral material (10) directly supplies said selector device (3).

5. Method according to one of claims 1 to 4, wherein said fine fraction (12) constitutes the end product.

6. Method according to one of claims 1 to 5, wherein the selector device (3) consists at least of a dynamic separator (4) equipped with a rotor.

7. Method according to claim 6, wherein said selector device (3) comprises, apart from the dynamic separator (4), a static separator (5) consisting essentially of an ascending duct, the fine materials discharged from said static separator feeding the entry to said dynamic separator (4).

8. Method according to claim 7, wherein the static separator (5) effects a granulometric separation greater than 1 millimetre and said dynamic separator (4) effects a granulometric separation at a size less than 100 micrometres.

9. Method according to claims 1 to 8, wherein the mineral material is a mixture of slag from the metallurgical industry and a mineral substance.

10. Plant (1) designed for implementing the method according to one of claims 1 to 9, suitable for grinding a mineral material containing at least calcium and metal impurities, comprising:
- a grinder (2) and a granulometric separation device, referred to as a selector device (3), able to separate the materials into two fractions, one fine (12), the other coarse (13), said selector device (3) comprising a dynamic separator (4) equipped with a rotor with a vertical axis, provided with blades on its periphery, able to separate the particles according to their granulometry by subjecting said particles to opposing forces, firstly the force generated by the rotation of the rotor, which tends to reject them, and secondly the drag force generated by the speed of a gas aspirated towards the centre of the rotor,
- first conveying means for transporting the ground material (11) at the discharge from the grinder (2) to the entry of the selector device (3),
- second conveying means for transporting the coarse fraction (13) at the discharge from said selector device (3) to the entry of the grinder (2),
**characterised in that** it also has a magnetic device (6) cooperating with said first conveying means and/or said second conveying means, able to extract from the transported materials (14) at least some of the metal impurities.

11. Plant according to claim 10, wherein the grinder (2) is a horizontal roller grinder.

12. Plant according to claim 10 or 11, wherein said selector device (3) comprises, in addition to the dynamic separator (4), a static separator (5) consisting essentially of an ascending duct, the fine materials discharged from the static separator feeding the entry to said dynamic separator (4).

13. Plant according to one of claims 10 to 12, wherein said magnetic device (6) cooperates with said first conveying means.

14. Plant according to one of claims 10 to 12 wherein said magnetic device (6) cooperates with said second conveying means.

15. Use of the fine fraction (12) obtained by implementing the method according to one of claims 1 to 9 as an end product for producing hydraulic binders such as cement or of the plant according to one of claims 10 to 14 for producing hydraulic binder such as cement.
